# EUROPEAN PATENT APPLICATION

(11) **EP 4 491 377 A1**
(43) Date of publication of application: **15.01.2025**
(21) Application number: 23461625.8
(22) Date of filing: 09.07.2023
(51) Int. Cl.: B29C 64/118, B29C 64/227, B33Y 30/00

(54) **MULTI-HEAD 3D PRINTER**

(71) Applicant: Uniwersytet Zielonogórski, 65-417 Zielona Góra (PL)
(72) Inventor: Ostrowski, Kacper, 65-533 Zielona Gora (PL); Paczkowski, Jacek, 67-100 Nowa Sol (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(57) **Abstract**

The object of the present invention is a multi-head 3D printer which contains at least two printer heads and has a frame in the shape of a straight prism, the bases of which are isosceles polygons other than an equilateral triangle, with a printer table on the lower base, in the side edges or on which are located the drive columns, on which are mounted the printer's arms which support and move two or more platforms to which the printer's heads are attached, the movement of the heads being performed by motors which move the arms independently, each head being attached to a platform which is supported and moved by three arms fixed on three adjacent drive columns positioned at three successive vertices of the polygon and provided with three motors which move the arms.

## Description

The present invention relates to a multi-head, modular 3D printer based on a Delta-type 3D printer. The printer design according to the invention uses the concept of a modified Delta-type printer to build a multi-head printer.

### Field of invention

A normal Delta-type 3D printer has a frame in the shape of a right triangular prism, whose bases are equilateral triangles. The printer table, stationary, is placed on the lower base. In the side edges there are rods (columns) on which the printer's arms are fixed, which support and move the platform to which the printer head is attached. Three motors, which move the arms independently, are responsible for the movement of the head, while the printing surface remains stationary.

Current 3D printing technology has several significant drawbacks:
- long print times;
- a single material is used for both the components that determine the strength of the detail and the quality of the surface finish;
- one and the same nozzle diameter for printing fine details and large flat surfaces.

### State of the art

Chinese patent application CN108481732A discloses a method for synchronous three-dimensional (3D) printing of partitions. The method avoids collisions between nozzles however only for simple prints, improves printing speed and extends printer life.

Chinese utility model CN217597830U describes a multi-head 3D printer and a method of collision avoidance. The design of the printer prevents each head from colliding with the others, which is the case in the analysed design. The design is simpler and less versatile than the analysed design.

Chinese utility models CN204566693U and CN217098927U describe Delta-type printers.

Chinese patent application CN106738919A describes a Delta printer with a rotating table that rotates and is all within reach of the head.

International patent application WO2018069749A1 relates to yetanother multi-head printer design.

In general, the multi-head printers described in the state of the art have designs that allow only one shape to be printed with multiple heads at a time. Some of the described printers have a magazine with many different materials, but use one at a time.

Meanwhile, the solution according to the present invention allows many different shapes to be printed from different materials simultaneously.

The aim of the present invention was to develop a 3D printer design that would reduce printing time, allow a stronger structure and a nicer part surface by using different materials with different colours or other properties, as well as nozzles with different diameters.

### The summary of the invention

This objective is achieved by the object of the present invention, which is a multi-head 3D printer which contains at least two printer heads and has a frame in the shape of a straight prism, the bases of which are isosceles polygons other than an equilateral triangle, with a printer table on the lower base, in the side edges or on which are located the drive columns, on which are mounted the printer's arms which support and move two or more platforms to which the printer's heads are attached, the movement of the heads being performed by motors which move the arms independently, each head being attached to a platform which is supported and moved by three arms fixed on three adjacent drive columns positioned at three successive vertices of the polygon and provided with three motors which move the arms.

The object of the invention is shown in the figures of the drawing, where:
Fig. 1 shows a modified Delta printer based on an octagon in a perspective view, side view, front view and top view;
Fig. 2 shows a 3D printer according to the present invention, which uses several Delta-type printers connected by a common table;
Fig. 3 shows example configurations of a 2-head and a 3-head printer.

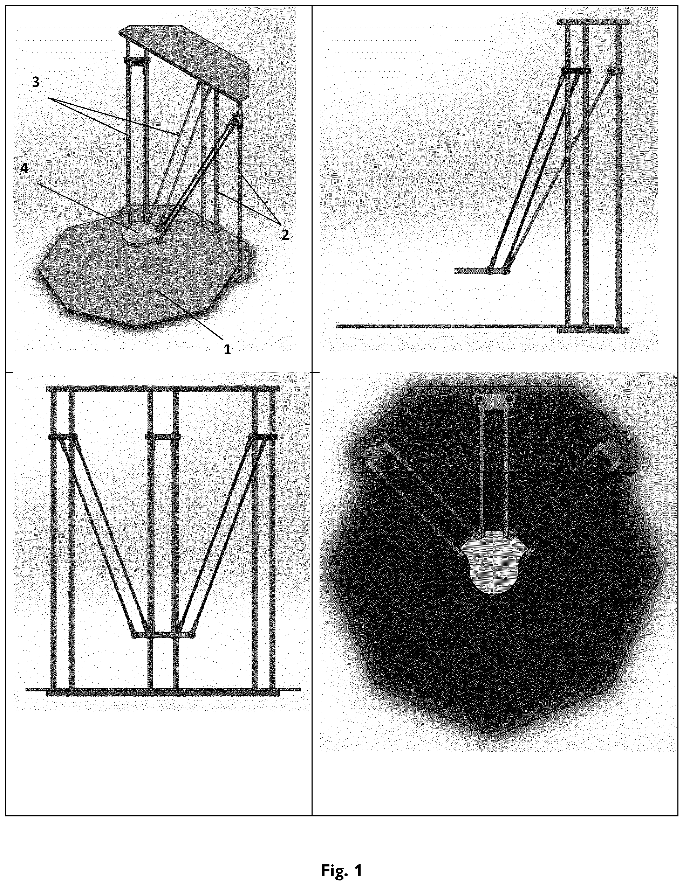

The modified Delta-type 3D printer is based on a polygon other than an equilateral triangle, such as an octagon, and is shown in Fig. 1 in perspective, side, front and top views. The modified Delta-type 3D printer has a frame in the shape of a straight prism whose bases are polygons, in the case shown in Fig. 1 it is a hexagon. On the lower base is placed the table (1) of the printer. At the side edges are drive columns (2) on which are fixed the arms (3) of the printer supporting and moving the platform (4) to which the printer head (not shown) is attached. Three motors (not shown) moving the arms independently are responsible for the movement of the head.

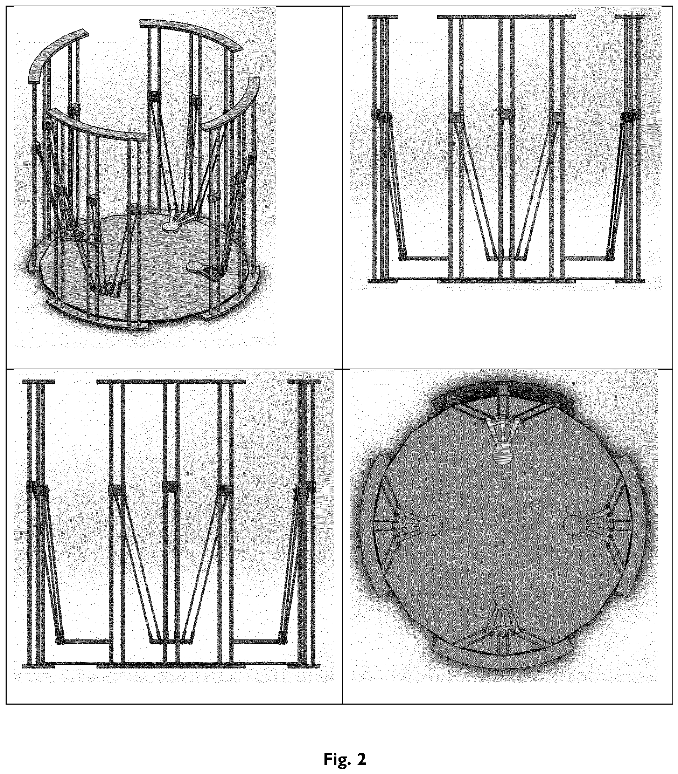

The 3D printer according to the present invention uses several Delta-type printers connected by a common table, as shown in Fig. 2.

Fig. 2 shows a 4-head printer in which the modules of the modified Delta type are based on a hexagon. Each module has the entire table in range and each module has an independent control. This allows four smaller prints to be printed simultaneously as on four separate printers, or one print to be printed simultaneously by four print heads. Intermediate variants are also possible, such as one head printing the supports and the other three heads simultaneously printing the detail.

Having multiple heads has a number of advantages, namely one head can print with support filament, a second with construction filament with a nozzle diameter of, say, 1 mm, a third with the same filament as the second but with a nozzle diameter of 0.2 mm. A fourth head, on the other hand, can print with a decorative filament, providing an aesthetically pleasing print.

The 3D printer according to the present invention has at least two heads, but can also contain three, four, five, six or more heads.

In an advantageous form of manufacture, the 3D printer according to the present invention is modular.

For example, four single-head printers, each with its own table, which is easily detachable, representing individual modules can be combined to produce the following configurations: two 2-head printers, or one 3-head printer plus one single-head printer, or one 4-head printer.

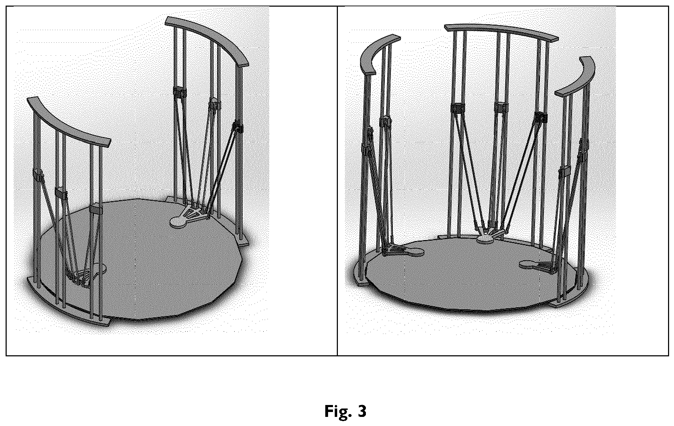

Fig. 3 shows example configurations of a 2-head and 3-head printer.

In a further advantageous example of implementation, the table (1) of the printer can be rotatable. In this way, one head can apply supports, then rotate the table, e.g. by 90°, and apply supports to the next workpiece, while a second head can simultaneously start applying construction material to the first workpiece, etc.

The rotary table (1) can also be divided into sections with separate heating of each section. This ensures that no energy is wasted on heating sections that are not currently being used for printing.

In a 3D printer with multiple simultaneously used heads and a shared workspace, head collisions can occur. A collision occurs when two heads try to print close enough together that one hits the other.

To prevent collisions, it is necessary to know the dimensions of the heads and the shape of the head relative to the head nozzle.

The multi-head printer can be used in a variety of ways:
1. All heads print with the same filament, the same colour and have the same outlet nozzle diameter.
2. At least one head has a different diameter discharge nozzle.
3. At least one head has a different colour of filament.
4. At least one head prints with a different filament.

The above variants can occur simultaneously. The slicer, which is the toolpath generation software used in most 3D printing processes to convert a 3D object model into specific instructions for the printer, selects for the print head the part of the print that it will perform most efficiently. A large nozzle diameter is predisposed to printing large flat surfaces. A small nozzle diameter is predisposed to printing those parts of the print that are to be reproduced accurately. A support material is predisposed to print all supports (especially those inside the print). A material giving an aesthetic outer surface is predisposed for the finishing of the surface of the print, the outer layers should be printed with it. A material with high mechanical strength is predisposed for printing the internal structure of the print.

The slicer must therefore adjust the heads' allocations according to their nozzle diameter, material colour and material type. On each layer, the heads are assigned areas to print in the form of an array of linear sections or arcs.

### A method of preventing collisions

The method of preventing collisions is based on the postprocessing of the G-CODE file. The layer to be printed consists of line segments and arcs on a plane with height Z. The postprocessor assigns each head a start point. From the start point, the first segment exits. The end of this segment borders the next segment. The postprocessor assigns successive segments to each head minimising idle movements. Knowing the accelerations and maximum velocities of all the heads, it is possible to calculate where they will be in the next sections. This allows the distance between heads to be controlled. The postprocessor de facto simulates the printing process by measuring the distance between the heads all the time. When the post-processor detects a collision, it takes a step back and either allocates another section to print one of the heads at risk of collision to prevent the collision, or reduces the speed of one of the heads or stops it for the time necessary to avoid a collision.

Since the sections are determined by the coordinates of the start and end points, it is possible to determine the direction of such a vector and, in the event of a collision risk, select another section directing away from the head with which a collision may occur.

If the speed is reduced, the air blowing over the print should be increased to prevent the print from melting where the head is slowed down or stopped. The head can also be raised higher for the duration of the stoppage.

When the sections to be printed are long, the post-processor can divide them into smaller sections and set the order in which they are to be printed so as to avoid collisions.

### Key features and advantages of the present invention:

1. The 3D printer is similar to the Delta printer but based on a different polygon than an equilateral triangle.
2. The structure is created by placing the drive columns at the vertices of the selected polygon.
3. The platform on which the head is fixed must be based on the same polygon.
4. The design can be based on a quadrilateral, pentagon, hexagon or any other polygon.
5. In addition, the printer can be equipped with a rotary table driven by another motor.
6. The rotary table can be larger than the printer's movement space, allowing multiple details to be printed without removing the earlier ones from the table.
7. The turntable can be divided into separately heated sections to heat only those sections that are currently being used for printing.
8. The modified Delta modules can be easily detached from the table and easily attached to the table of another printer of the same type. As a result, it is possible to obtain two 2-head printers or one 3-head printer or one 4-head printer from four printers of the modified Delta type.
9. The design may be based on a different polygon to the hexagon shown in the figures and consequently have more heads.
10. Preventing head collisions can be based on dividing the print area into zones and assigning the zones to the heads in such a way as to exclude collisions.
11. Collision prevention can be based on dynamic measurement of the distance between the print heads and the allocation of print segments to the print heads in such a way that a collision is impossible (in the event of a possible collision, one of the endangered print heads selects another print segment from its list so that no collision occurs).
12. Collision prevention can be based on measuring the distance between the heads and modifying the speed of movement of the heads to exclude the possibility of a collision (one head slows down or stops to allow the other to pass at a safe distance). In this case, the speed at which the material is ejected from the nozzle must be adapted to the speed of the head movement.
13. If one of the heads stops, the nozzle of this head needs to be blown higher to prevent the material from leaking out, or the head can be raised higher and the material can be pulled back into the head by a set distance (retraction).

## Claims

1. A multi-head 3D printer, which contains at least two print heads and has a frame in the shape of a straight prism whose bases are isosceles polygons other than an equilateral triangle, with a table (1) of the printer placed on the lower base, at the lateral edges or on the lateral edges there are drive columns (2) on which are fixed the arms (3) of the printer which support and move at least two platforms (4), to which the heads of the printer are attached, the movement of the heads being performed by motors moving the arms independently, **characterised in that** each head, is attached to a platform (4) which is supported and moved by three arms (3) fixed on three adjacent drive columns (2) located at three successive vertices of the polygon and provided with three motors moving the arms.

2. The multi-head 3D printer according to claim 1, **characterised in that** the table (1) of the printer is rotatable and driven independently by a motor.

3. The multi-head 3D printer according to claim 1 or 2, **characterised in that** the table (1) is larger than the movement space of the printer heads.

4. The multi-head 3D printer according to claims 1 or 2 or 3, **characterised in that** the table (1) is divided into independently heated sections.

5. The multi-head 3D printer according to any of the claims 1-4, **characterised in that** it has a modular structure in which each head attached to the platform (4) which is supported and moved by three arms (3) attached to three adjacent drive columns (2) located at three consecutive polygon vertices and equipped with three motors moving the arms together with a detachably attached table (1) constitutes one module and said printer may comprise at least two modules with one common table (1).

6. The multi-head 3D printer according to any of the claims 1-5, **characterised in that** it is provided with a system to prevent collision of the printer heads.

7. The multi-head 3D printer according to claim 6, **characterised in that** the anti-collision system of the printer heads is based on the division of the print area into zones and the allocation of zones to the heads to exclude the possibility of collision.

8. The multi-head 3D printer according to claim 6, **characterised in that** the anti-collision system of the printer heads is based on a dynamic measurement of the distance between the heads and allocation of print sections to the heads to exclude the possibility of collision.

9. The multi-head 3D printer according to claim 6, **characterised in that** the anti-collision system of the printer heads is based on measuring the distance between the heads and modifying the speed of movement of the heads to exclude the possibility of collision and preferably with adjustment of the speed of ejection of the material from the head nozzle to the speed of movement of the head.

10. The multi-head 3D printer according to claim 9, **characterised in that** when the head is stopped, the blowing on the nozzle of this head is increased or the head is raised to prevent melting of the print or the material is forced back into the head to prevent material leakage.
